# EUROPÄISCHE PATENTANMELDUNG

(11) **EP 4 324 672 A1**
(43) Veröffentlichungstag der Anmeldung: **21.02.2024**
(21) Anmeldenummer: 23192293.1
(22) Anmeldetag: 19.08.2023
(51) Int. Cl.: B60J 7/16, B60P 3/34, B60H 1/00, B60H 1/22, B60H 1/24

(54) **FREIZEITFAHRZEUG MIT EINER ANORDNUNG**

(30) Priorität: 19.08.2022 DE 102022121084
(71) Anmelder: Hymer GmbH & Co. KG, 88339 Bad Waldsee (DE)
(72) Erfinder: Mathias, Christian, 88427 Bad Schussenried (DE)
(74) Vertreter: Müller Schupfner & Partner Patent- und Rechtsanwaltspartnerschaft mbB

(57) **Zusammenfassung**

Anordnung (2) mit zumindest einem Rahmenelement (4), das für ein Hubdach (3) eines Freizeitfahrzeugs (1), insbesondere eines Wohnmobils oder eines Wohnwagens, dient, wobei im montierten Zustand zumindest ein Seitenwandteil (5, 6) des Hubdachs (3) an dem Rahmenelement (4) befestigt ist. Vorgeschlagen wird, dass das zumindest eine Rahmenelement (4) zumindest in einem montierten Zustand einen Luftkanal (7) bildet, durch den in den Luftkanal (7) geführte Luft entlang des Rahmenelements (4) führbar ist, und dass im montierten Zustand Luft aus dem Luftkanal (7) entlang des Rahmenelements (4) verteilt in das Hubdach (3) führbar ist. Ferner wird ein Freizeitfahrzeug (1) mit solch einer Anordnung (2) angegeben.

## Beschreibung

Die Erfindung betrifft ein Freizeitfahrzeug mit einer Anordnung, wobei die Anordnung zumindest ein Rahmenelement, das für ein Hubdach eines Freizeitfahrzeugs dient, aufweist. Das Freizeitfahrzeug ist insbesondere als Wohnmobil oder Wohnwagen ausgebildet.

Aus der DE 10 2021 104 861 A1 ist ein Freizeitfahrzeug, insbesondere Wohnmobil, mit einem Aufenthaltsbereich über einem Fahrersitzplatz als Alkoven, insbesondere Schlafbereich, bekannt. Hierbei ist ein Dachbereich über dem Alkoven zur Raumerweiterung anhebbar, der allseitig durch aufblasbare Hohlkammerelemente gebildete Seitenwände aufweist sowie die Hubbewegung bestimmende Leitelemente. Das Freizeitfahrzeug ist hierbei so ausgebildet, dass die Hubbewegung durch das Leitelement derart geführt wird, dass der Dachbereich vollständig abhebt und in seiner angehobenen Stellung um einen Winkel um eine Fahrzeugquerachse gedreht ist gegenüber seiner abgesenkten Stellung.

Aufgabe der Erfindung ist es, eine Anordnung für ein Freizeitfahrzeug, insbesondere für ein Wohnmobil oder einen Wohnwagen, und ein Freizeitfahrzeug mit einer Anordnung anzugeben, die eine verbesserte Funktionsweise aufweisen und verbessert ausgestaltet sind.

Die Aufgabe wird durch eine Anordnung mit den Merkmalen des unabhängigen Patentanspruchs 1 und durch ein Freizeitfahrzeug mit den Merkmalen des Patentanspruchs 10 gelöst. Vorteilhafte Weiterbildung der Erfindung sind in den Unteransprüchen angegeben.

Die Aufgabe wird durch eine Anordnung mit zumindest einem Rahmenelement, das für ein Hubdach eines Freizeitfahrzeugs, insbesondere eines Wohnmobils oder eines Wohnwagens, dient, gelöst, wobei im montierten Zustand zumindest ein Seitenwandteil des Hubdachs an dem Rahmenelement befestigt ist, wobei das zumindest eine Rahmenelement zumindest in einem montierten Zustand einen Luftkanal bildet, durch den in den Luftkanal geführte Luft entlang des Rahmenelements führbar ist, und wobei im montierten Zustand Luft aus dem Luftkanal entlang des Rahmenelement verteilt in das Hubdach führbar ist.

Ferner wird die Aufgabe durch ein Freizeitfahrzeug, insbesondere ein Wohnmobil oder einen Wohnwagen, mit solch einer Anordnung gelöst.

Vorteilhaft ist es, dass zumindest ein Rahmenelement im montierten Zustand so an einem Fahrzeugdach befestigt ist, dass der Luftkanal zumindest im Wesentlichen zwischen einer Innenseite des Rahmenelements und einer Außenseite des Fahrzeugdachs gebildet ist. Bei der Außenseite kann es sich insbesondere um die Oberseite des Fahrzeugdaches handeln. Beispielsweise kann das Rahmenelement ein offenes Profil aufweisen, das mit seiner offenen Seite auf das Fahrzeugdach montiert wird.

Vorteilhaft ist es, dass das Rahmenelement zumindest einen Falz aufweist, an dem das Rahmenelement zumindest mittelbar, insbesondere mittels einer Verbindungsleiste, mit dem Fahrzeugdach verbunden ist. Hierdurch ist ein stabile und zuverlässige Montage bei einer gewichtsoptimierten Ausgestaltung möglich.

Vorteilhaft ist es, dass das Rahmenelement entlang seiner Erstreckung mit einem zumindest im Wesentlichen gleichbleibendem Profil ausgestaltet ist und/oder dass das zumindest eine Rahmenelement ein Trennteil aufweist und dass durch das Trennteil ein von dem Luftkanal getrennter Kanal in dem Rahmenelement ausgestaltet ist. Dadurch kann das Rahmenelement für weitere Funktionen genutzt werden. Beispielsweise können durch den Kanal elektrische Leitungen geführt werden.

Vorteilhaft ist es, dass zumindest ein Seitenwandteil des Hubdachs vorgesehen ist und dass das zumindest eine Seitenwandteil als aufblasbares Seitenwandteil ausgebildet ist. Hierdurch ist insbesondere eine verbesserte thermische Isolierung möglich.

Vorteilhaft ist es, dass die Luft aus dem Luftkanal zumindest teilweise, insbesondere zumindest im Wesentlichen, in einen von dem zumindest einen Seitenwandteil umschlossenen Innenraum des Hubdachs führbar ist. Speziell kann die Luft aus dem Luftkanal von Verlusten abgesehen vollständig in den Innenraum des Hubdachs geführt werden.

Vorteilhaft ist es, dass zumindest eine Einrichtung vorgesehen ist, die zur Luftheizung und/oder Luftkühlung dient, und dass von der zumindest einen Einrichtung erwärmte beziehungsweise gekühlte Luft in den Luftkanal des zumindest einen Rahmenelements führbar ist. Hierdurch kann der Komfort insbesondere beim Schlafen weiter verbessert werden. Ferner kann die Nutzung hierdurch in Bezug auf das Komfortbedürfnis der Nutzer auch bei niedrigeren oder höheren Außentemperaturen, insbesondere niedrigeren Außentemperaturen in der Nacht, erfolgen. Somit ergeben sich jahreszeitlich und geografisch betrachtet breitere Nutzungsmöglichkeiten.

Vorteilhaft ist es, dass das zumindest eine Rahmenelement einen Dachrahmen bildet, der das Hubdach an zumindest drei Seiten, vorzugsweise an allen Seiten, umfasst, insbesondere umschließt. Hierdurch kann eine besonders gleichmäßige Einleitung der Luft erfolgen.

Vorteilhaft ist es, dass das zumindest eine Rahmenelement zumindest einen Luftauslass aufweist, der so angeordnet ist, dass im montierten Zustand zumindest eine erwärmte Luft, die wärmer als eine Luft im Hubdach ist, zumindest teilweise an eine Innenwand des zumindest einen Seitenwandteils geführt ist. Dadurch kann die Raumwand erwärmt werden, um eine Kondenswasserbildung zu verhindern oder zumindest zu verringern.

Je nach Ausgestaltung können ein oder mehrere der folgenden Vorteile erreicht werden. Eine gleichmäßige Luftverteilung ohne Zugerscheinungen kann erreicht werden. Warmluft aus der Heizungsanlage kann verteilt werden. Zusätzlich oder alternativ kann auch Kaltluft aus der Klimaanlage verteilt werden. Eine Luftführung kann in vorteilhafter Weise reguliert werden.

Die Luft kann in vorteilhafter Weise in einen Rahmen geführt werden, der sich um den Schlafraum erstreckt, so dass eine besonders vorteilhafte Verteilung der Luft möglich ist. Die Luftführung kann als zusätzliche Luftführung realisiert werden. Die Luft, insbesondere eine erwärmte oder abgekühlte Luft, kann gleichmäßig verteilt werden um eine angenehme Raumtemperatur zu erreichen. Die Raumwand kann in vorteilhafter Weise erwärmt werden, um insbesondere eine Kondenswasserbildung zu verhindern.

Weitere Vorteile und Einzelheiten der Erfindung werden anhand des in den schematischen Figuren dargestellten Ausführungsbeispiels näher erläutert. Hierbei zeigen:
- Fig. 1: Ein Freizeitfahrzeug mit einer Anordnung entsprechend einem Ausführungsbeispiel in einer räumlichen, schematischen Darstellung;
- Fig. 2: die Anordnung des in Fig. 1 dargestellten Freizeitfahrzeugs in einer auszugsweisen, schematischen Darstellung, wobei ein Rahmenelement im Querschnitt und stark vereinfacht ein Dach des Freizeitfahrzeugs dargestellt sind; und
- Fig. 3: eine Anordnung mit mehreren Rahmenelementen in einer auszugsweisen, schematischen, räumlichen Darstellung entsprechend einer möglichen Ausgestaltung.

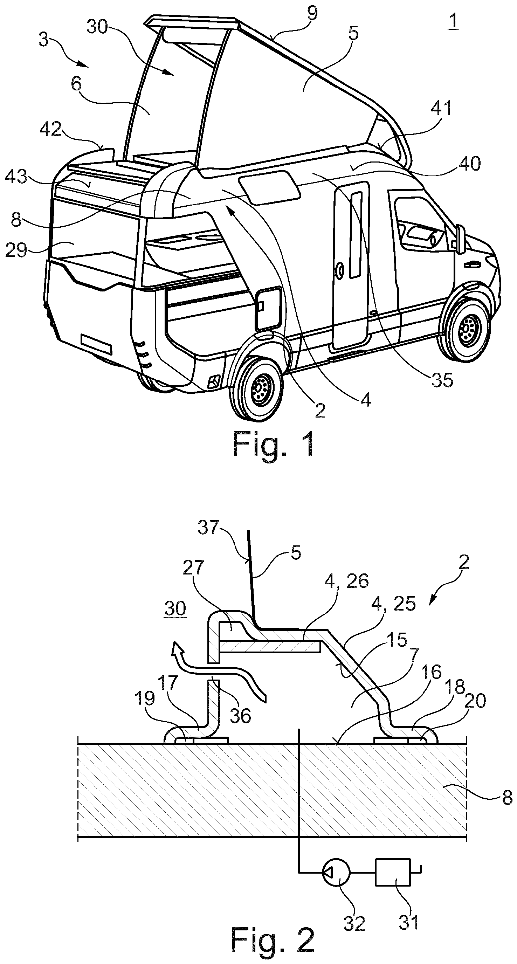

Fig. 1 zeigt ein Freizeitfahrzeug 1 mit einer Anordnung 2 (Fig. 2) in einer räumlichen, schematischen Darstellung entsprechend einem Ausführungsbeispiel der Erfindung.

Das Freizeitfahrzeug 1 kann insbesondere als Wohnmobil oder Wohnwagen ausgebildet sein. Das Freizeitfahrzeug 1 weist hierbei ein Hubdach 3 auf. Die Anordnung 2 eignet sich insbesondere für solche Freizeitfahrzeuge 1. Ferner zeigt Fig. 2 die Anordnung 2 des in Fig. 1 dargestellten Freizeitfahrzeugs 1 in einer auszugsweisen, schematischen Darstellung, wobei ein Rahmenelement 4 im Querschnitt und stark vereinfacht ein Fahrzeugdach 8 des Freizeitfahrzeugs 1 dargestellt sind. Der Begriff des Fahrzeugdachs 8 ist allgemein zu verstehen und umfasst auch Elemente, insbesondere Dachelemente, die mit einer sonstigen Dachkonstruktion des Freizeitfahrzeugs 1 verbunden sind.

Die Anordnung 2 umfasst zumindest ein Rahmenelement 4, das für das Hubdach 3 des Freizeitfahrzeugs 1 dient. Hierbei sind Seitenwandteile 5, 6 des Hubdachs 3 an dem Rahmenelement 4 befestigt, wobei exemplarisch die Seitenwandteile 5, 6 gekennzeichnet sind. Die Seitenwandteile 5, 6 sind als aufblasbares Seitenwandteile 5, 6 ausgebildet. Hierbei kann eine Versteifung der Seitenwandteile 5, 6 durch Innenzugelemente erzielt werden. Insbesondere kann ein Drop-Stich-Aubau realisiert sein. Je nach Ausgestaltung können mehrere Rahmenelemente 4 vorgesehen sein, die miteinander verbunden sein können.

Das Rahmenelement 4 bildet einen Luftkanal 7, durch den in den Luftkanal 7 geführte Luft entlang des Rahmenelements 4 geführt wird. Luft aus dem Luftkanal 7 wird dabei entlang des Rahmenelements 4 verteilt in das Hubdach 3 geführt. Das Rahmenelement 4 ist in diesem Ausführungsbeispiel so an dem Fahrzeugdach 8 befestigt, dass der Luftkanal 7 zwischen einer Innenseite 15 des Rahmenelements 4 und einer Außenseite 16 des Fahrzeugdachs 8 gebildet ist. Die Außenseite 16 des Fahrzeugdachs 8 ist hierbei die Oberseite 16 des Fahrzeugdachs 8. In diesem Ausführungsbeispiel weist das Rahmenelement 4 Falze 17, 18 auf, an denen Rahmenelement 4 zumindest teilweise mittels Verbindungsleisten 19, 20, mit dem Fahrzeugdach 8 verbunden ist.

Vorzugsweise ist das Rahmenelement 4 entlang seiner Erstreckung entlang der Fahrzeugseiten sowie gegebenenfalls entlang der Dachkante über der Windschutzscheibe und entlang der Dachkante über der Heckklappe mit einem gleichbleibendem Profil 25 ausgestaltet. Dadurch ergibt sich eine vorteilhafte Luftführung und es kann eine vorteilhafte Geometrie für die Montage des Freizeitfahrzeugs geschaffen werden.

In diesem Ausführungsbeispiel weist das Rahmenelement 4 außerdem ein Trennteil 26 aufweist. Das Trennteil 26 trennt einen von dem Luftkanal 7 getrennten Kanal 27 in dem Rahmenelement 4 ab. Der Kanal kann beispielsweise für elektrische Leitungen dienen.

Die Luft aus dem Luftkanal 7 wird in den Innenraum 30 des Hubdachs 3 geführt. Vorzugsweise ist das Hubdach hierbei an allen Seiten mit Seitenwandteilen 5, 6 versehen, die aufblasbar sind. Speziell kann hierbei der Innenraum 30 auch über dem Heck 29 verschlossen werden. Hierdurch kann der Innenraum 30 allseitig von den Seitenwandteilen 5, 6 umschlossen werden. Die Luft wird dann beispielsweise beim Schlafen in den von den Seitenwandteilen 5, 6 umschlossenen Innenraum 30 des Hubdachs 3 geführt.

Zusätzlich ist es hierbei besonders vorteilhaft, dass eine Einrichtung 31 vorgesehen ist, die zur Luftheizung und/oder Luftkühlung dient. Vorzugsweise wird zumindest eine Luftheizung realisiert. Die von der Einrichtung 31 erwärmte beziehungsweise gekühlte Luft kann dann von einer Pumpe 32 in den Luftkanal 7 des Rahmenelements 4 gefördert werden.

In diesem Ausführungsbeispiel bilden ein oder mehrere Rahmenelemente 4 einen Dachrahmen 35, der das Hubdach 3 an zumindest drei Seiten 40 bis 43 umfasst und vorzugsweise an allen vier Seiten 40 bis 43 umschließt.

Das Rahmenelement 4 umfasst einen oder mehrere Luftauslässe 36. Die erwärmte Luft wird über die Luftauslässe 36 an eine Innenwand 37 des Seitenwandteils 5 geführt. Hierbei kann die erwärmte Luft von dem Luftauslass 36 aufsteigen und so an die Innenwand 37 gelangen.

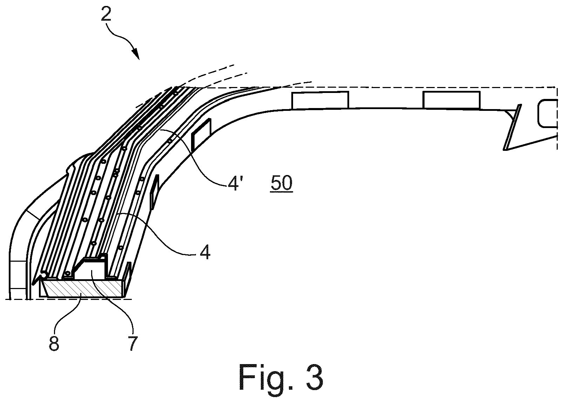

Fig. 3 zeigt eine Anordnung 2 mit mehreren Rahmenelementen 4, 4' in einer auszugsweisen, schematischen, räumlichen Darstellung entsprechend einer möglichen Ausgestaltung. Hierbei sind exemplarisch die Rahmenelemente 4, 4' gekennzeichnet. Die Rahmenelemente 4, 4' können auf diese Weise einen Luftkanal 7 bilden, der um einen Schlafbereich 50 geführt ist.

Die vorzugsweise als Hutprofil ausgestalteten Rahmenelemente 4, 4' können hierbei zugleich als Wassersperre dienen. Die Rahmenelemente 4, 4' können auch zur Aussteifung dienen, was beispielsweise in Bezug auf eine Öffnung im Fahrzeugdach 8, insbesondere einen Dachausschnitt vorteilhaft ist. Ferner dienen die Rahmenelemente 4, 4' als Befestigung für einen Zeltstoff oder dergleichen der Seitenwandteile 5, 6. Ein Ausgestaltung des Profils 25 als Hohlprofil ist wegen der erzielten Steifigkeit und für die Fixierung der Zeltbahn oder dergleichen vorteilhaft. Zu einem oder mehreren dieser zusätzlichen Vorteile beziehungsweise Funktionsweisen kommt die Funktion als Luftkanal 7, insbesondere Warmluftkanal (Warmluftzuführungskanal), der besonders bevorzugt vollständig umlaufend oder U-förmig umlaufend um zumindest eine Matratze im Schlafbereich 50 ist.

Die Erfindung ist nicht auf die beschriebenen Ausführungsformen beschränkt.

## Patentansprüche

1. Anordnung (2) mit zumindest einem Rahmenelement (4), das für ein Hubdach (3) eines Freizeitfahrzeugs (1), insbesondere eines Wohnmobils oder eines Wohnwagens, dient, wobei im montierten Zustand zumindest ein Seitenwandteil (5, 6) des Hubdachs (3) an dem Rahmenelement (4) befestigt ist,
**dadurch gekennzeichnet,**
**dass** das zumindest eine Rahmenelement (4) zumindest in einem montierten Zustand einen Luftkanal (7) bildet, durch den in den Luftkanal (7) geführte Luft entlang des Rahmenelements (4) führbar ist, und dass im montierten Zustand Luft aus dem Luftkanal (7) entlang des Rahmenelements (4) verteilt in das Hubdach (3) führbar ist.

2. Anordnung nach Anspruch 1,
**dadurch gekennzeichnet,**
**dass** zumindest ein Rahmenelement (4) im montierten Zustand so an einem Fahrzeugdach (8) befestigt ist, dass der Luftkanal (7) zumindest im Wesentlichen zwischen einer Innenseite (15) des Rahmenelements (4) und einer Außenseite (16) des Fahrzeugdachs (8) gebildet ist.

3. Anordnung nach Anspruch 1 oder 2,
**dadurch gekennzeichnet,**
**dass** das Rahmenelement (4) zumindest einen Falz (17, 18) aufweist, an dem das Rahmenelement (4) zumindest mittelbar, insbesondere mittels einer Verbindungsleiste (19, 20), mit dem Fahrzeugdach (8) verbunden ist.

4. Anordnung nach einem der Ansprüche 1 bis 3,
**dadurch gekennzeichnet,**
**dass** das Rahmenelement (4) entlang seiner Erstreckung mit einem zumindest im Wesentlichen gleichbleibendem Profil (25) ausgestaltet ist und/oder dass das zumindest eine Rahmenelement (4) ein Trennteil (26) aufweist und dass durch das Trennteil (26) ein von dem Luftkanal (7) getrennter Kanal (27) in dem Rahmenelement (4) ausgestaltet ist.

5. Anordnung nach einem der Ansprüche 1 bis 4,
**dadurch gekennzeichnet,**
**dass** zumindest ein Seitenwandteil (5, 6) des Hubdachs (3) vorgesehen ist und dass das zumindest eine Seitenwandteil (5, 6) als aufblasbares Seitenwandteil (5, 6) ausgebildet ist.

6. Anordnung nach einem der Ansprüche 1 bis 5,
**dadurch gekennzeichnet,**
**dass** die Luft aus dem Luftkanal (7) zumindest teilweise, insbesondere zumindest im Wesentlichen, in einen von dem zumindest einen Seitenwandteil (5, 6) umschlossenen Innenraum (30) des Hubdachs (3) führbar ist.

7. Anordnung nach einem der Ansprüche 1 bis 6,
**dadurch gekennzeichnet,**
**dass** zumindest eine Einrichtung (31) vorgesehen ist, die zur Luftheizung und/oder Luftkühlung dient, und dass von der zumindest einen Einrichtung (31) erwärmte beziehungsweise gekühlte Luft in den Luftkanal (7) des zumindest einen Rahmenelements (4) führbar ist.

8. Anordnung nach einem der Ansprüche 1 bis 7,
**dadurch gekennzeichnet,**
**dass** das zumindest eine Rahmenelement (4) einen Dachrahmen (35) bildet, der das Hubdach (3) an zumindest drei Seiten, vorzugsweise an allen Seiten, umfasst, insbesondere umschließt.

9. Anordnung nach einem der Ansprüche 1 bis 8,
**dadurch gekennzeichnet,**
**dass** das zumindest eine Rahmenelement (4) zumindest einen Luftauslass (36) aufweist, der so angeordnet ist, dass im montierten Zustand zumindest eine erwärmte Luft, die wärmer als eine Luft im Hubdach (3) ist, zumindest teilweise an eine Innenwand (37) des zumindest einen Seitenwandteils (5) geführt ist.

10. Freizeitfahrzeug (1), insbesondere Wohnmobil oder Wohnwagen, mit einer Anordnung (2) nach einem der Ansprüche 1 bis 9.
